# EUROPEAN PATENT APPLICATION

(11) **EP 4 451 635 A1**
(43) Date of publication of application: **23.10.2024**
(21) Application number: 23305582.1
(22) Date of filing: 17.04.2023
(51) Int. Cl.: H04L 41/142, H04L 41/14, H04L 41/147, H04L 41/50

(54) **A FEEDBACK ON ALTERNATIVE QOS FORMAT FOR ENABLING APPLICATION STATISTICAL SATISFACTION COMPUTATION**

(71) Applicant: Mitsubishi Electric R&D Centre Europe BV, 1119 NS Schiphol Rijk Amsterdam (NL); MITSUBISHI ELECTRIC CORPORATION, Chiyoda-ku Tokyo 100-8310 (JP)
(72) Inventor: KHANFOUCI, Mourad, 35708 RENNES CEDEX 7 (FR); BONNEVILLE, Hervé, 35708 RENNES CEDEX 7 (FR); GRESSET, Nicolas, 35708 RENNES CEDEX 7 (FR)
(74) Representative: Plasseraud IP

(57) **Abstract**

The invention relates to a method for providing feedback to an application, the method being implemented by at least one network function of a mobile communication network, the method comprising:
- obtaining an applicative request indicating a reference quality-of-service profile and at least one alternative quality-of-service profile; and
- providing feedback information relating to a probability of fluctuation of quality-of-service output by the mobile communication network for the application function over a time period between a plurality of levels, a level corresponding to a quality-of-service profile indicated in the applicative request.

The invention further relates to a corresponding device and to a corresponding computer program.

## Description

### Technical Field

This disclosure pertains to the field of telecommunications.

The disclosure more particularly relates to a method for providing feedback to an application function, to a corresponding device, and to a corresponding computer program.

### Background Art

The industrial deployment of an application over a private mobile communication network is a key topic for ensuring the success of industry 4.0.

3GPP TS 23.502 describes in detail the state-of-the-art workflow for this deployment in a 5G communication network.

This state-of-the-art workflow allows the 5GCN to dynamically adapt the QoS according to UE mobility and to fluctuations of radio condition by reducing the QoS for a data flow at times when the 5GCN cannot provide enough resource to fulfil the target QoS for the associated application.

The basic problem with this state-of-the-art workflow involving dynamic adaptation of the QoS is twofold.

The application has to dynamically react to the current QoS response, which doesn't prevent outages, i.e. for example if the 5GCN responds with the lowest AQP for a long period of time that exceeds the application survival time. This situation leads to outage for non-elastic applications. Moreover, long term QoE of the application is not optimized by this reactive approach.

From the 5GCN point of view, there is no a priori knowledge of the ability of the application to be robust to the QoS fluctuation, which may result in either a provisioning of too much resource, when available, or in an abusive rejection of the QoS request.

There is therefore a need for a signalling mechanism that allows integrating an application in an industrial deployment over a private mobile communication network and that overcomes the shortcomings mentioned above.

### Summary

This disclosure improves the situation.

It is proposed a method for providing feedback information to an application that is using a deployment of a mobile communication network to achieve its quality of service, the method being implemented by at least one network function of the mobile communication network, the method comprising:
- obtaining an applicative request indicating a plurality of quality-of-service profiles ; and
- providing feedback information relating to a probability of fluctuation of quality-of-service that is expected to be achieved by the mobile communication network for the application function over a time period between a plurality of levels, a level corresponding to a quality-of-service profile indicated in the applicative request.

The main advantage of the proposed method is to offer flexibility for application integration and adaptation as well as customization of the 5GCN.

When the mobile communication network is a 5G communication network, the method may be implemented, specifically, by the network data analytics function (NWDAF) and/or by the network exposure function (NEF).

The plurality of quality-of-service profiles indicated in the applicative request may include for instance a reference QoS profile as a nominal request of the application and one or more alternative QoS profiles as degraded modes. The plurality of quality-of-service profiles indicated in the applicative request may each be defined by one or more values or ranges for QoS parameters including speed/throughput, latency, network availability, reliability parameters like block error ratio, jitter, bandwidth, etc.

The fluctuation of QoS that is expected to be achieved over time between the plurality of levels is a discrete representation by levels of the expected fluctuation over time of the values of the QoS parameters during the time period.

Optionally, the time period is an operation time of the network for serving the application or at least part of said operation time. The time period and/or the operation time of the network may be for example set to a default or predetermined value such as a survival time of the application. The time period and/or the operation time of the network may be for example estimated before, after or jointly with the prediction of the statistical distribution of the QoS profiles specified in the request.

The feedback information provided to the application function can be interpreted by the application function as a prediction of a statistical distribution of the QoS profiles specified in the request. This prediction may be performed by and/or made available to the entity implementing the proposed method.

Optionally, the feedback information comprises an expected time spent for each level of the plurality of levels. In an example, the expected time spent for each level of the plurality of levels can be relative, as a proportion of the time period. For instance, the feedback information may comprise an indication that the QoS expected to be output for the application function should correspond, during at least x% of the time period, to the reference QoS profile and during at most y% of the time period to a specific alternative QoS profile. In an example, the expected time spent for each level of the plurality of levels can be absolute, as a duration. For instance, the feedback information may comprise, for each of the QoS profiles, a minimum and/or a maximum expected duration of a time interval where the QoS expected to be output for the application function meets such QoS profile. Optionally, the feedback information comprises the maximum expected duration of a time interval during which the quality-of-service that is expected to be achieved by the mobile communication network for the application over the time period corresponds to a given level of the plurality of levels. This maximum expected duration may be an absolute duration (expressed in time units) or a relative duration (expressed in percentage of the time period). Optionally, the feedback information comprises an expected percentage of time during which the quality-of-service that is expected to be achieved by the mobile communication network for the application over the time period corresponds to a given level of the plurality of levels.

Optionally, the method may further comprise, after obtaining the applicative request, extrapolating the feedback information based on measured quality-of-service parameters of a communication in the mobile communication network that are classified according to the quality-of-service profiles indicated in the applicative request. Optionally, extrapolating The method may further comprise obtaining the plurality of levels by classifying the measured quality-of-service parameters with respect to the plurality of quality-of-service profiles indicated in the applicative request. As an example, the measured quality-of-service parameters may be organized in timestamped sets. The timestamped sets may be classified to obtain a number of groups or clusters. Each such cluster may be assigned a level. Some or all of these levels may each be associated to a respective quality-of-service profile among the quality-of service profiles indicated in the applicative request. Then, for instance, it is a simple matter of counting the number of subsequent timestamped sets classified as belonging to the same level to determine the duration of the time interval during which the quality-of-service that is expected to be achieved by the mobile communication network for the application over the time period corresponds to said level.

Optionally, the method may further comprise obtaining, from the application function, an additional applicative message indicating an expected long-term satisfaction associated to the feedback information provided to the application function.

Optionally, the method may further comprise allocating resources of the mobile communication network based on the expected long-term satisfaction indicated in the applicative message.

Optionally, the method may further comprise providing new feedback information to the application function, the new feedback information being related to a new probability of fluctuation of quality-of-service output by the mobile communication network for the application function over the time period for at least one of the plurality of levels.

Optionally, the method may further comprise inferring the new feedback information based on the expected long-term satisfaction indicated in the applicative message and on new measured quality-of-service parameters of communication in the mobile communication network that are classified according to the quality-of-service profiles indicated in the applicative request.

It is further proposed a device configured to implement at least part of a core function of a mobile communication network, the device being further configured to:
- obtain an applicative request indicating a plurality of quality-of-service profiles ; and
- provide feedback information to an application that is using a deployment of the mobile communication network to achieve its quality-of-service, the feedback information being related to a probability of fluctuation of quality-of-service expected to be achieved by the mobile communication network for the application over a time period between a plurality of levels, a level corresponding to a quality of service profile indicated in the applicative request.

It is further proposed a computer program comprising instructions which, when the program is executed by a computer, cause the computer to carry out the above method.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general-purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

### Brief Description of Drawings

Other features, details and advantages will be shown in the following detailed description and on the figures, on which:
**Fig. 1**

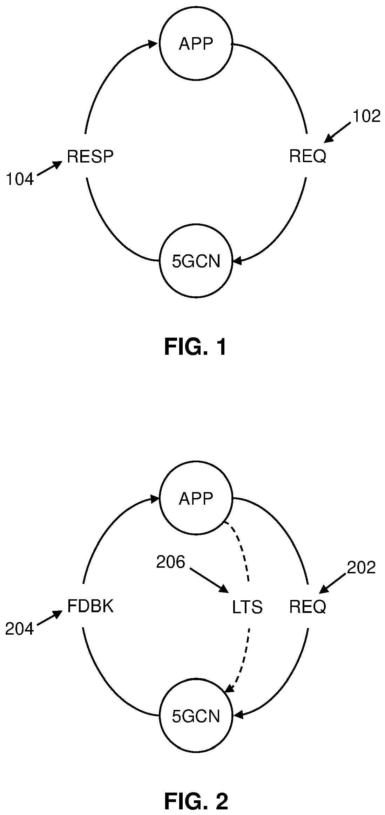

   [Fig. 1] illustrates a state-of-the-art workflow, for the integration of an application in an industrial deployment over a private mobile communication network.
**Fig. 2**
   [Fig. 2] illustrates a basic workflow, according to an embodiment of the present disclosure, of a procedure for integrating an application in an industrial deployment over a private mobile communication network.
**Fig. 3**

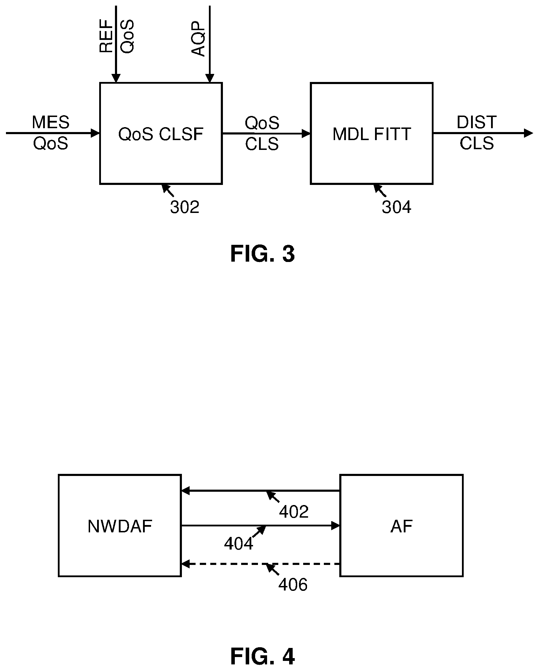

   [Fig. 3] illustrates a general setup, according to an embodiment of the present disclosure, for a processing procedure performed by a network function of a mobile communication network in order to derive statistical information representing an expected fluctuation of quality-of-service output by the mobile communication network, for an application function, over a time period.
**Fig. 4**
   [Fig. 4] illustrates a workflow of a signaling procedure between an application function and a network function of a mobile communication network, according to an embodiment of the present disclosure.

### Description of Embodiments

It is now referred to Figure 1, which depicts a basic signalling procedure corresponding to the state-of-the-art workflow for the industrial deployment of an application over a private 5G mobile communication network. Additional details on this state-of-the-art workflow can be found in TS 23.502, section 4.15.6.6.

A 5G mobile communication network, or 5G system, comprises a 5G core network (5GCN) and a 5G New Radio Access Network. The user equipments (UE) may connect over the 5G New Radio Access Network to the 5GCN and further to Data Networks (DN) like the Internet.

The key components of the 5GCN are network functions split up by service to govern the network behavior. These network functions include:
- the Access and Mobility Management Function (AMF) which acts as a single-entry point for the UE connection,
- respective Session Management Functions (SMF) selected by the AMF for managing a user session for a service requested by the UE,
- the User Plane Function (UPF) which transports the IP data traffic (user plane) between the User Equipment (UE) and the external networks, and
- the Policy Control Function (PCF) which provides the policy control framework,
- the Unified Data Management (UDM) function which manages network user data,
- the Application Function (AF) which provides application services,
- the Network Data Analytics Function (NWDAF) which collects data from the other 5G network functions, processes these data and outputs analytics, for instance statistical analytics or machine learning predictions, to support the other 5G network functions,
- the Network Exposure Function (NEF) which exposes 3GPP core network capabilities to third parties,
- etc.

The 5G network stack comprises an open wireless architecture layer, a network layer, an open transport layer and an application layer (APP). The latter can be mapped to the presentation layer and to the application layer of the OSI stack.

This basic signalling procedure relates to communications between the application layer (APP) and the 5G core network (5GCN) and can be summed up as following.

The application layer (APP) requests to the 5G core network (5GCN) a communication session between the core network and a user equipment (UE) with a specific application quality-of-service (QoS).

This request (102) is an applicative request which contains a variety of information that may include for instance:
- an address of the user equipment (UE address), for instance an IP address of the UE,
- an identifier of the application function (AF identifier),
- a flow description,
- an external application identifier,
- a reference QoS,
- one or more QoS parameters,
- alternative service requirements (AQP),
- a data network name (DNN) such as an access point name (APN),
- etc.

The 5GCN responds to the request with a QoS response message (104) that includes an authorization response (ACK/NACK) for the session, and that further includes the QoS that is achieved in the network. The latter can be the reference QoS or one of a plurality of possible alternative QoS profiles.

This basic signalling procedure allows the 5GCN to perform AQP dynamic adaptation of the QoS, by managing available resources according to the mobility of the UE and to the fluctuations of radio condition. However, this reactive approach neither particularly optimizes long term quality-of-experience of the application nor resource management by the 5GCN.

It is now presented, in a particular embodiment of the present disclosure, an improved signalling procedure, through application-level messaging, that provides a proactive solution to this lack of optimization.

According to this improved signalling procedure, the 5GCN transmits, along with the QoS response message, additional information about the probability of the fluctuation of the QoS adaptation. This additional information contains anticipated multilevel QoS information that may be computed by the 5GCN from RAN-level parameters for instance.

This anticipated multilevel QoS information:
helps the APP to prevently adapt to the change of network conditions and minimize the outage for inelastic applications,
further allows the APP to transmit additional satisfaction information in the QoS request that represents a long term expected (statistical) QoE obtained from the statistics of the anticipated QoS transmitted by the APP, and
further helps the 5GCN to provision the right amount of resource according to the satisfaction feedback from the application.

Figure 2 illustrates a basic workflow for the integration of an application to a 5G deployment according to this particular embodiment.

This basic workflow presents transmissions of exemplary requests and messages between the APP and the 5GCN.

The APP transmits a QoS request (202) including a list of QoS profiles to the 5GCN. The list of QoS profiles may include a reference QoS profile (refQoS) which corresponds to a preferred QoS mode. The list of QoS profiles may include one or more alternative QoS profiles (AQP) which each corresponds to a degraded QoS mode.

This network function then feedbacks to the APP statistical information (204) related to the future QoS output by the network for the application. This feedback may be provided periodically or through notification.

The statistical information is related to the QoS profiles included in the QoS request (202).

The statistical information transmitted in the QoS response message is different from the in advance quality of service notification (IQN) scheme defined in 5GAA TR 23-700-81, because IQN is used to transmit relative network coverage, data rate or latency degradation, all of which are not related to QoS profiles requested by an application. Moreover, the current state-of-the-art does not provide any possibility for the 5GCN to transmit QoS statistics to an application.

In embodiments, the statistical information may contain a plurality of set of parameters, one set of parameters being related to a corresponding one of the QoS profiles indicated in the QoS request (202).

In embodiments, the statistical information may contain a set of parameters related to a plurality, or all, of the QoS profiles indicated in the QoS request. For instance, the statistical information may contain a first set of parameters related to a reference QoS profile indicated in the QoS request and a second set of parameters related to a plurality of alternative QoS profiles indicated in the QoS request.

The signalling procedure between the APP and the network function is unaffected by any intermediate actions which may be provided between the reception of the QoS request (202) and the feedback of the statistical information (204).

Such intermediate actions may include, but are not limited to:
- processing the QoS request,
- forwarding the QoS request to another entity of the 5GCN that is tasked with processing the QoS request,
- running or triggering an inference procedure to infer the statistical information (204),
- retrieving the statistical information (204), in particular in cases where the statistical information are predetermined,
- etc.

Additional implementation details on the inferring procedure and on the nature of the statistical information are provided in a further passage of this document.

The 5GCN may further open a data flow corresponding to a session associated to the QoS request. The 5GCN may further allocate resources, such as radio resources or virtual resources, according to a QoS profile adaptation mechanism that corresponds to the statistical information (204) feedback to the AF.

Optionally, the feedback from the 5GCN to the APP can be combined with a subsequent feedback from the APP to the 5GCN to form a feedback sequence.

For instance, the statistical information (204) feedback to the APP allows determining information (206) related with the expected long-term satisfaction for the application may be considered readily available to the APP and may be provided by the APP to the network function of the 5GCN as a feedback related to a behavior of the application when presented with the statistical information (204) previously provided by said network function of the 5GCN.

The feedback sequence may be repeated several times.

In particular, when the 5GCN has obtained the information (206) related with the expected long-term satisfaction for the application, the 5GCN may perform a new processing in order to infer, once again, about the probabilities of the future QoS output by the network. This time, the new processing shall not be based solely on the QoS request, but also on the long-term satisfaction provided as feedback by the AF. These successive iterations allow finding a QoS profile adaptation mechanism that is optimized in that long-term satisfaction for the application is maximized.

The 5GCN may further open the data flow corresponding to the session associated to the QoS request and may allocate the resources according to the optimized QoS profile adaptation mechanism.

Additional implementation details are now provided about the possible uses of the statistical information (204) on the APP side. The statistical information relates to a QoS profile adaptation during a specific observation time and is also called "network state information".

The application APP may use the statistical information to:
- estimate an application layer related satisfaction metric such as a quality-of-experience (QoE) distribution, also called "long-term quality-of-experience",
- estimate application layer outage related metrics such as an application survival time, defined as the average time the system QoS is allowed to stay in a degraded QoS mode, i.e. the lowest AQP of the QoS profile of the application layer,
- estimate application layer resources allocation metrics where it is assumed that application layer control plane, i.e. AF, is able to adapt the application layer packet rate in order to cope with the QoS degradation in the network.

The statistical information may further be used to derive rate adaptation actions at the application layer.

Depending on the application type, i.e. critical inelastic or non-critical elastic applications, the different actions at the application layer as defined above can be of high importance. For example, critical and non-elastic applications may use the AQP distribution to estimate the outage events, i.e. the probability that degraded modes of AQP are maintained for sufficiently long time. The APP outage is defined when time is superior to the application survival time, for example. For non-critical elastic applications, the application layer rate control can be calculated in order to maximize the overall rate with respect to network state information. One solution in this case can be for example to adapt the application rate with respect to AQP statistics through some form of transmit control protocol (TCP).

When the statistical information (204) includes information noted f_refQoS that relates to a reference QoS profile specified in the QoS request (202) and information noted f_AQP that relates to one or more alternative QoS profiles specified in the QoS request, the application layer APP may calculate, based on f_refQoS and f_AQP, a long-term satisfaction parameter or index, noted IDX, for the application. The long-term satisfaction parameter may be for example related to Mean opinion score (MoS) of the application clients, or to some specific application layer related metric such as application layer throughput, application E2E latency, application resiliency, application survival time, etc. The satisfaction metric may be also a function of the different application layer metrics above. This long-term satisfaction index may then be used by the 5GCN to orchestrate the resources in the 5G radio access network (RAN) and/or the transport network resources in order to maximize the application satisfaction.

Additional implementation details that are applicable to embodiments where the statistical information (204) is periodically reported by the 5GCN to the APP are now provided. These additional implementation details are illustrated by Figure 3, which describes a general setup for the processing that may be performed by the 5GCN in order to derive the statistical information.

The 5GCN receives an initial QoS request from the APP and setups a PDU session with QoS parameters chosen as corresponding to one of the QoS profiles specified in the QoS request. For instance, the PDU session may be setup with QoS parameters that are closest to the reference QoS profile when applicable, or else with QoS parameters that are closest to an alternative QoS profile.

The 5GCN stores the QoS profiles specified in the initial QoS request. The 5GCN may define, for each of the stored QoS profile, a corresponding class, with the classes being ranked from the highest QoS, corresponding for instance to the reference QoS profile that indicates the best QoS mode for the APP, to the lowest QoS, corresponding for instance to the alternative QoS profile that indicates the most degraded QoS mode for the APP.

The 5GCN further measures periodically the QoS parameters of the ongoing PDU Session, i.e. every period of T seconds where the following is performed. Optionally, the 5GCN may periodically measure the QoS parameters of a plurality of ongoing PDU Sessions for the same application.

A QoS classifier (302) may be provided to allow the 5GCN to perform a classification of the measurements to the stored QoS profile.

Specifically, the QoS classifier may be configured to allow the 5GCN to perform a deterministic classification of the measurements to the stored QoS profiles. For instance, the 5GCN may count occurrences of events classified as members of the reference QoS profile, or as members of the alternative QoS profiles. f_refQoS may be obtained as the total count of the class corresponding to the reference QoS and f_AQP as the total count of the class corresponding to the alternative QoS profiles of the application.

Alternatively, the QoS classifier may be configured to allow the 5GCN to perform a probabilistic classification of the measurements to the stored QoS profiles of APP. The 5GCN may for instance use a restricted Boltzmann machine (RBM) to extract, from the network QoS measurements, features that are used to calculate the probabilistic distributions of occurrence of the events that are classified as members of the reference QoS profile, or of the alternative QoS profiles. f_refQoS may be obtained as the distribution of the features corresponding to the reference QoS profile and f_AQP may be obtained as the distribution of the features corresponding to the alternative QoS profiles.

In addition to the QoS classifier, a model fitter (304) can further be provided to allow the 5GCN to perform model fitting.

For instance, the model fitter may be configured to allow the 5GCN to perform Markov model fitting by evaluating an average number of transition occurrences between reference QoS and alternative QoS classes across multiple measurements periods (NT), with N being an integer number. In other words, the 5GCN may count a number of events where the output of the classification changes from the reference QoS profile to an alternative QoS profile. 5GCN may also evaluate time durations where the output classification stays in the same class. These counts define a Markov transition matrix that may be used to calculate stationary probabilities of the reference and alternative QoS classes.

Alternatively, or in combination with the Markov model fitting, the model fitter may be configured to allow the 5GCN to perform general Bayesian filtering where it selects from the statistical output of the classifier to reconstruct the multi- variate distribution of the reference and alternative QoS classes.

Examples of statistical information (204) that may be transmitted by the 5GCN to the application layer are now provided.

The classification and processing steps described above allow determining average durations, during an observation time period T, during which the 5G system serves the APP with the reference QoS profile or with an alternative QoS profile. As part of the statistical information, f_refQoS may then contain the average duration during which the 5G system serves the APP with the reference QoS profile, while f_AQP may then contain, for one or more alternative QoS profiles, the average duration during which the 5G system serves the APP with said alternative QoS profile.

The statistical information may contain the probability distribution of the measured QoS provided by the 5G system during the time period T, that is represented by a combined distribution of the reference and alternative QoS profiles and by probabilities that are not associated to any specific APP request. This information can be obtained through probabilistic classification of the measurements as described above.

The statistical information may contain the probability that the reference QoS profile is not fulfilled during time period T, i.e. the probability that only one or more alternative QoS profiles is achieved during the time period T. This information can be obtained by model fitting as described above.

The statistical information may contain the probability that none of the reference and alternative QoS profiles is fulfilled during time period T, i.e. the probability that the network is not able to achieve any of the QoS profiles specified in the request from the APP. This information represents the outage probability of the APP in the current deployment of APP in the 5GCN.

The statistical information may contain the cumulative distribution of the measured QoS provided by the 5G system during the time period T, i.e. the probability that the QoS class obtained from the measurements is below a specific QoS class.

The statistical information may contain quantiles, such as:
- the quantile of the cumulative distribution where the reference QoS profile is not fulfilled during the time period T; and/or
- the quantile of the cumulative distribution where the reference and alternative QoS profiles are not fulfilled during the time period T; and/or
- the quantile of the probability distribution that represents a percentage of UEs that experience a QoS that does not fulfill the reference QoS profile during the time period T; and/or
- the quantile of the probability distribution that represents a percentage of UEs that experience a QoS that fulfills neither the reference QoS profile nor any alternative QoS profile during the time period T.

The quantiles mentioned above are useful for the APP to assess its performance during the period T since the probability of achieving the reference QoS represents the average best behavior of the APP. The probability of not fulfilling the reference QoS is expressing the average time period the APP is in a degraded mode, which may be critical for inelastic applications. The quantile of the probability distribution or of the cumulative distribution can represent the APP deployment efficiency since it is related to the QoS performance of some specific UEs in the deployment.

The APP may use the quantiles mentioned above to predict APP layer outages during the time period T. For example, critical applications may be less tolerant to large periods of time of being served by the 5GCN essentially in a degraded mode.

Examples of information (206) related with the expected long-term satisfaction for the application are now provided.

This information (206) is sent as feedback from the application layer APP as a response to the statistical information (204) that is previously transmitted by the 5GCN, for instance f_refQoS and f_AQP.

This feedback describes the overall long-term behavior of the application or the application reaction with respect to the statistical distribution of the request QoS parameters that is predicted by the 5GCN. In other words, this feedback describes the overall long-term behavior of the application or the application reaction with respect to expected QoS fluctuations between the QoS profiles specified in the QoS request (202) according to the statistical information (204).

The information (206) may include various types of QoE statistics, such as one or more of the following:
- a long-term APP satisfaction index (IDX), and/or
- a maximum QoE achieved by extrapolating, at the APP, a quality of experience (QoE) distribution over a time period, and/or
- an average QoE achieved by extrapolating, at the APP, a quality of experience (QoE) distribution over a time period, etc.

The index, the maximum QoE and the average QoE may be expressed in the form of application classes, i.e. as the result of a classification, by the APP, of QoE statistics associated to the QoS statistics provided by the 5GCN in response to the QoS request.

The long-term APP satisfaction index, the maximum QoE and the average QoE are examples of information (206) that may be used by the 5GCN to simplify the calculation of the QoS distribution and to filter the transmission of the distribution of the QoS to the APP in case of multiple applications.

The information (206) sent as feedback from the application layer APP may be used by the 5GCN as input for a QoE-based resource orchestration step.

In embodiments where the statistical information (204) is periodically reported by the 5GCN to the APP, this statistical information accounts for such resource reorchestration, which allows, through several iterations, jointly optimizing long-term QoE for the APP and resource allocation by the 5GCN.

In the above description, the workflow for the integration of an application to a 5G deployment is depicted as a series of transmissions of data such as requests or feedback messages from the APP to a network function of the 5GCN and vice versa.

Figure 4 illustrates a possible implementation of the above workflow within the 5GCN as a series of communications using the N33 reference point between the AF, which handles the application, and the NWDAF or the NEF, as the "network function of the 5GCN" mentioned above.

The AF transmits (402) the QoS request (202) to the NWDAF or the NEF.

In turn, the NWDAF or the NEF feedbacks (404) the statistical information (204) to the AF.

Then, optionally, the AF feedbacks (406) the information (206) related with the expected long-term satisfaction for the application.

Optionally, steps 404 to 406 may be repeated periodically or upon repeat of step 402.

### Citation List

3GPP TS 23.502 - Procedures for the 5G System (5GS), Version 18.0.0 and earlier.
5GAA TR 23-700-81 - Study of Enablers for Network Automation for the 5G System (5GS); Phase 3, Version 18.0.0 and earlier.

## Claims

1. Method for providing feedback information to an application that is using a deployment of a mobile communication network to achieve its quality of service, the method being implemented by at least one network function of the mobile communication network, the method comprising:
- obtaining an applicative request indicating a plurality of quality-of-service profiles ; and
- providing feedback information relating to a probability of fluctuation of quality-of-service that is expected to be achieved by the mobile communication network for the application over a time period between a plurality of levels, a level corresponding to a quality-of-service profile indicated in the applicative request.

2. Method according to claim 1, wherein the feedback information comprises the maximum expected duration of a time interval during which the quality-of-service that is expected to be achieved by the mobile communication network for the application over the time period corresponds to a given level of the plurality of levels.

3. Method according to claim 1 or 2, wherein the feedback information comprises an expected percentage of time during which the quality-of-service that is expected to be achieved by the mobile communication network for the application over the time period corresponds to a given level of the plurality of levels.

4. Method according to any one of claims 1 to 3, wherein the time period is at least part of an operation time of the network for serving the application.

5. Method according to any one of claims 1 to 4, further comprising, after obtaining the applicative request, extrapolating the feedback information based on measured quality-of-service parameters of a communication in the mobile communication network.

6. Method according to claim 5, wherein extrapolating the feedback information comprises inferring the feedback information based on the plurality of levels.

7. Method according to any one of claims 1 to 6, further comprising obtaining the plurality of levels by classifying the measured quality-of-service parameters with respect to the plurality of quality-of-service profiles indicated in the applicative request.

8. Method according to any one of claims 1 to 7, further comprising obtaining, from the application function, an additional applicative message indicating an expected long-term satisfaction associated to the feedback information provided to the application function.

9. Method according to claim 8, further comprising allocating resources of the mobile communication network based on the expected long-term satisfaction indicated in the applicative message.

10. Method according to claim 8 or 9, further comprising providing new feedback information to the application function, the new feedback information being related to a new probability of fluctuation of quality-of-service output by the mobile communication network for the application function over the time period for at least one of the plurality of levels.

11. Method according to claim 10, further comprising inferring the new feedback information based on the expected long-term satisfaction indicated in the applicative message and on new measured quality-of-service parameters of communication in the mobile communication network that are classified according to the quality-of-service profiles indicated in the applicative request.

12. Device configured to implement at least part of a core function of a mobile communication network, the device being further configured to:
- obtain an applicative request indicating a plurality of quality-of-service profiles ; and
- provide feedback information to an application that is using a deployment of the mobile communication network to achieve its quality-of-service, the feedback information being related to a probability of fluctuation of quality-of-service expected to be achieved by the mobile communication network for the application over a time period between a plurality of levels, a level corresponding to a quality-of-service profile indicated in the applicative request.

13. Computer program comprising instructions which, when the program is executed by a computer, cause the computer to carry out the method of any one of claims 1 to 11.
